# EUROPÄISCHE PATENTANMELDUNG

(11) **EP 1 233 588 A2**
(43) Veröffentlichungstag der Anmeldung: **21.08.2002**
(21) Anmeldenummer: 02360037.2
(22) Anmeldetag: 22.01.2002
(51) Int. Cl.: H04L 25/49, H04B 10/00

(54) **Erzeugung von optisch codierten Signalen**

(30) Priorität: 14.02.2001 DE 10107110
(71) Anmelder: ALCATEL, 75008 Paris (FR)
(72) Erfinder: Pfeiffer, Thomas, 70569 Stuttgart (DE)
(74) Vertreter: Rausch, Gabriele, Dr.

(57) **Zusammenfassung**

Es wird ein Sender zum Erzeugen von optisch codierten Signalen mit einer Lichtquelle zur Erzeugung eines breitbandigen optischen Spektrums vorgeschlagen. Weiterhin wird ein Verfahren zur Erzeugung von optisch codierten Signalen sowie ein Übertragungssystem zur Übertragung von optisch codierten Signalen beschrieben.

## Beschreibung

Die Erfindung geht aus von einem Sender zum Erzeugen von optisch codierten Signalen mit einer Lichtquelle zur Erzeugung eines breitbandigen optischen Spektrums, einer Schaltung zur Modulation des breitbandigen optischen Signals mit einem Datensignal und einem Codierungsfilter. Weiterhin geht die Erfindung von einem Verfahren zum Erzeugen von optisch codierten Signalen zur Übertragung in einem Kommunikationsnetz aus. Weiterhin ist Grundlage der Erfindung ein Übertragungssystem unter Verwendung eines Senders zum Erzeugen von optisch codierten Signalen.

Ein Verfahren sowie ein System zur Übertragung von optisch codierten Signalen ist beispielsweise aus der DE 19723103.9 bekannt. Ein optisches Übertragungssystem für die Übertragung von optisch codierten Signalen enthält Sender, Übertragungsstrecken sowie Empfänger. Jeder Sender enthält einen Kodierer, in dem die zu übertragenden Signale vor ihrer Aussendung in das optische Übertragungssystem codiert werden. Die Codierung erfolgt auf optischem Wege, beispielsweise durch Frequenzcodierung mittels eines optischen Filters. Jeder Empfänger im Übertragungssystem, der die vom Sender ausgesendeten optischen Signale empfangen will, muss einen Decodierer enthalten, der auf einen speziellen Kodierer eines Senders abgestimmt ist. Im einfachsten Fall sind die Frequenzbereiche, die für optische Signale durchlässig und die Frequenzbereiche, die für optische Signale gesperrt sind, bei Kodierer im Sender sowie Decodierer im Empfänger gleich. Diese Übertragungssysteme sind unter dem Begriff CDM (Code Division Multiplex) bekannt. Die Empfänger in einem CDM Übertragungssystem sind im Stand der Technik als Differenzempfänger aufgebaut. Nur so können die bei einem CDM - Übertragungsverfahren auftretenden Effekte des Übersprechens eliminiert werden. Die Anforderungen an die Differenzempfänger sind entsprechend hoch und führen zu kostenintensiven und aufwendigen Geräten. Beispielsweise ist aus der DE 19748756 ein solcher Differenzempfänger bekannt. Der aufwendige Aufbau des Empfängers für die Verwendung in einem CDM-System limitiert durch abweichende Eigenschaften der Bauteile die Bit-Rate für einen Übertragungskanal. Die notwendigen Abstimmungen, die zur Erhöhung der Bitrate über 1 Gbit pro Sekunde nötig wären, führen zu weiterem Aufwand und weiteren Kosten für die Herstellung eines Empfängers.

Aus der noch nicht veröffentlichten DE 10035074 ist ein CDM-Übertragungsverfahren bekannt, das erweitert um einen optischen Signalprozessor den Aufwand im Empfänger erheblich reduziert. In diesem Verfahren wird zu dem codierten Signal das jeweils invertierte Signal erzeugt und zu einem gemeinsamen Signal überlagert. Das resultierende Signal enthält keine Intensitätsmodulationen mehr. Im Empfänger ist die Decodierung dieses "quasi-konstanten" Signals auf einfache Weise möglich. Dabei werden alle Kanäle, deren Kodierung nicht mit der Decodierung des Empfängers übereinstimmt, mit einer konstanten Leistung durchgelassen. Für die Kanäle, deren Kodierung nicht der Dekodierung des Empfängers entspricht, wird eine spektral-kodierte "1" mit einer bestimmten Leistung transmittiert. Da der optische Prozessor auch im Fall einer "0" denselben Signalpegel liefert, wird im Empfänger ebenfalls dieselbe Leistung transmittiert. Nur der Kanal mit der passenden Kodierung erzeugt ein Ausgangssignal, das bei einer "1" etwas größer ist als bei einer "0".
Die Aufnahme eines optischen Signalprozessors in ein Übertragungssystem bedeutet ein zusätzliches Element und zusätzlichen Aufwand.

Ebenfalls aus dem Stand der Technik ist eine sogenanntes kohärentes Multiplex-Verfahren bekannt. (G. J. Pencock et al.," Capacity of ...", Optical Communications 143, Seite 109 - 117, 1997). In einem solchen Übertragungssystem werden ebenfalls invertierte Signale erzeugt und überlagert. Die Erzeugung der invertierten Signale erfordert ein Verstimmen des verwendeten optischen Filters. Dieses Verfahren ist für den Einsatz in einem kostengünstigen und einfachen Sendesystem zu aufwendig.

Der erfindungsgemäße Sender zum Erzeugen von optisch codierten Signalen weist einen einfachen Aufbau aus breitbandiger Lichtquelle eine Schaltung zur Modulation des breitbandigen Signals sowie ein Kodierungsfilter mit zwei Eingängen auf. Das Kodierungsfilter kodiert die anliegenden Signale passiv und wird nicht abgestimmt.

Weitere Ausführungsbeispiele der Erfindung werden in der nachfolgenden Beschreibung näher erläutert. Es zeigt
Figur 1 schematisch den Aufbau eines optischen Senders,
Figur 2 a ein Mach Zehnder Filter,

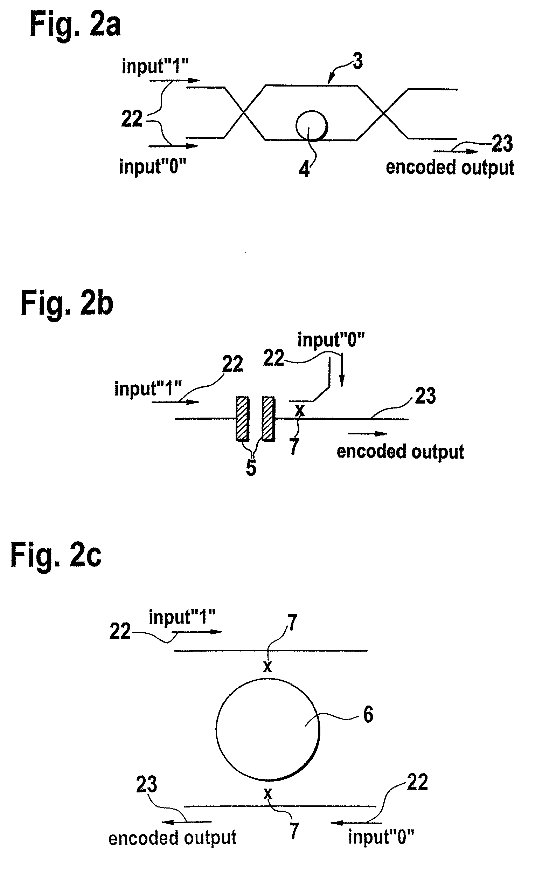

Figur 2 b ein Fabry Perot Filter,
Figur 2 c ein Ringresonator-Filter und
Figur 3 eine Lösung für den optischen Switch.

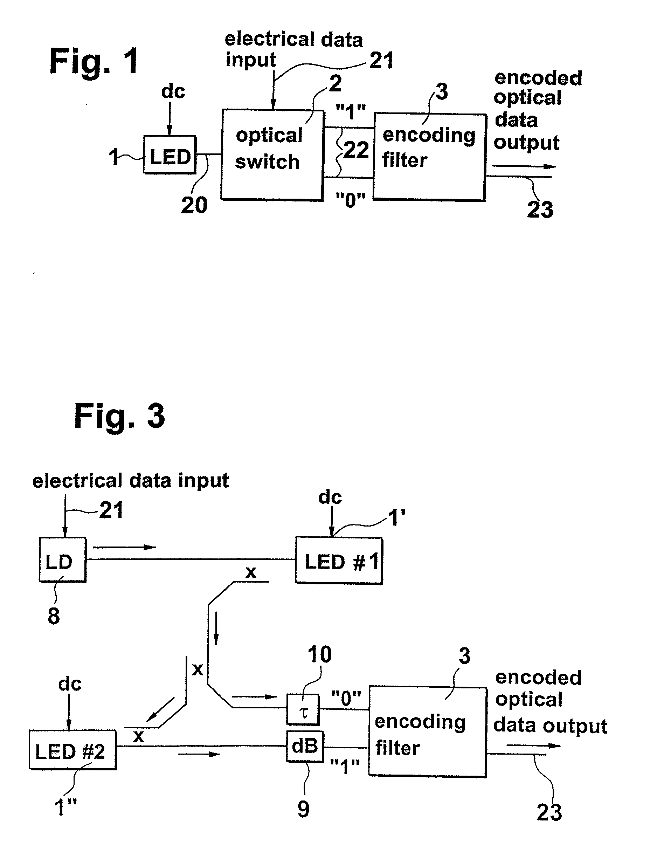

In Figur 1 ist eine Leuchtdiode LED 1 mit einem elektro-optischen Schalter 2 verbunden. Der elektro-optische Schalter 2 weist einen Eingang für ein elektrisches Datensignal 21 auf. Der elektro-optische Schalter 2 weist weiterhin zwei Ausgänge 22 auf. Diese Ausgänge 22 sind mit den Eingängen eines Kodierungsfilters 3 verbunden. Der Ausgang des Kodierungsfilters 3 liegt an einer Übertragungsstrecke an. In dieser beispielhaften Anordnung ist die LED 1 mit einem DC-Treiber verbunden. Die LED ist in einer Ausführungsform an einen Intensitätsmodulator angeschlossen. Ein solcher Intensitätsmodulator ist als Mach Zehnder Struktur ausgebildet und weist zwei komplementäre Ausgänge 22 auf. Die Signale dieser beiden Ausgänge 22 korrespondieren dabei jeweils mit einer logischen "1" oder "0". Die beiden Arme des Mach Zehnder Modulators sind mit den Eingängen eines Kodierungsfilters 3 verbunden. Am Ausgang des Kodierungsfilters 3 liegt ein optisches Spektrum an, das eine Kodierung gemäss der Filtertransmissionskurve aufweist. Diese Filterkurve oder ihre komplementäre Ergänzung hängen von den beiden Eingängen und den dort anliegenden Signalen ab. Eine erste Ausführungsform des Kodierungsfilters 3 zeigt Figur 2 a. Die beiden Eingänge für das Kodierungsfilter sind die beiden Arme eines Mach Zehnder Filters. Das Signal einer logischen "1" liegt dabei am oberen Arm des Mach Zehnder Filters an. Wird eine logische "0" kodiert, liegt das Eingangssignal dagegen am unteren Arm des Mach Zehnder Filters an. Bei der Kodierung entsteht ausgangsseitig ein Signal, das je nach Eingangsarm kodiert und zueinander komplementär ist. Figur 2 b zeigt ein Kodierungsfilter mit einem Fabry Perot Aufbau. Hier liegt der Eingang für die logische "1" direkt an den Spiegeln 5 an. Das kodiert Signal entsteht in Transmission des Fabry Perot Interferometers. Das Eingangsignal der logischen "0" liegt über einem Koppler 7 am Ausgangspiegel des Fabry Perots an. Dieses Signal wird in Reflektion kodiert. In einem drittem Ausführungsbeispiel nach Figur 2 c wird ein Ringresonator-Filter verwendet. Der Ringresonator enthält zwei Koppler 7 und zwei Eingänge, die das Signal in unterschiedliche Richtung einkoppeln. Auch dadurch entsteht eine komplementäre Codierung für die jeweiligen Signaleingänge "1" und "0".
Figur 3 zeigt eine Ausführungsform, für den optischen Schalter 2. Verwendet wird dabei ein Emitter für breitbandige ASE (Amplified Spontaneous Emission). Ein solcher Emitter für spontane verstärkte Emission ist aus der Anmeldung DE 10013718.0 bekannt. Beispielsweise kommt dabei ein optischer Halbleiterverstärker zum Einsatz. Der Halbleiterverstärker wird mit einem konstanten Betriebsstrom angeregt, sodass eine konstante, breitbandige ASE emittiert wird. Die Emission ist solange konstant, solange kein optisches Signal am Halbleiterverstärker anliegt. Kommt über die Übertragungsstrecke eine codierte 1 an, wird die ASE des Halbleiterverstärkers verringert. Liegt eingangsseitig eine 0 an, emittiert der Halbleiterverstärker sein Maximum an ASE. Die emittierte ASE Leistung ist gegenüber der Eingangsleistung invertiert. Als breitbandiger Emitter von ASE ist auch eine Leuchtdiode einsetzbar. In Figur 3 ist ein Ausführungsbeispiel unter Verwendung von Leuchtdioden gezeigt. Eine Laserdiode 8 wird mit elektrischen Daten in ihrer Intensität moduliert. Die Laserdiode 8 ist mit einer LED l'verbunden. Die LED l'wird mit einer Gleichspannung betrieben. Die LED 1' ist sowohl mit dem ersten Eingang des Kodierungsfilters 3 als auch mit dem Eingang einer zweiten LED 1" verbunden. Die zweite LED 1" ist mit dem zweiten Eingang des Kodierungsfilters 3 verbunden. Emittiert die Laserdiode 8 eine "1", also ist "Licht an", so wird bei der DC-angesteuerten LED 1' durch das Laserlicht die Emission reduziert. Kommt von der ersten Leuchtdiode 1' kein (oder nur geringes Signal), ist die zweite LED 1" aktiv. Die breitbandige Emission wird dann durch das Kodierungsfilter 3 codiert. Die Kodierung erfolgt über den Eingang "1" des Kodierungsfilters. Im anderen Fall ist die Laserdiode ausgeschaltet. Die LED l'erzeugt ein breitbandiges Lichtsignal, welches an der LED 1" anliegt. Dieses Signal liegt am Eingang "0" des Kodierungsfilters an. Die zweite LED 1''' emittiert kein Signal. Am Ausgang des Kodierungsfilters 3 werden die 1 und die 0 unterschiedlich in komplementäre Spektren codiert. Die Lichtsignale der beiden Leuchtdioden sind in der Zeit versetzt und haben dieselbe Intensität . Als Resultat liegt eine in der Zeit konstante Ausgangsintensität nach dem Kodierungsfilter 3 vor. In der Ausführungsform nach Figur 3 ist ein Verzögerungsglied 10 skizziert. Weiterhin ist ein Dämpfungsglied 9 eingezeichnet. Diese beiden Elemente sind nicht zwingend notwendig. Sie stellen vielmehr einen Hinweis darauf dar, dass in einer optimierten Ausführungsform eine Anpassung der Zeit und der Amplituden der Lichtsignale vorgenommen wird. Diese Elemente sind vor dem Kodierungsfilter angeordnet.

## Patentansprüche

1. Sender zum Erzeugen von optisch kodierten Signalen mit einer Lichtquelle (1) zur Erzeugung eines breitbandigen optischen Spektrums, einer Schaltung (2) zur Modulation des breitbandigen optischen Signals mit einem Datensignal (21), wobei das optische Ausgangsignal (22) auf zwei invertierte Ausgänge der Schaltung aufgeteilt ist und einem Kodierungsfilter (3), das die beiden invertierten optischen Ausgangssignale (22) jeweils zu einem Übertragungssignal (23) optisch kodiert.

2. Sender nach Anspruch 1 unter Verwendung eines Mach Zehnder Filters

3. Sender nach Anspruch 1 unter Verwendung eines Fabry Perot Filters.

4. Sender nach Anspruch 1 unter Verwendung eines Ringresonator-Filters

5. Sender nach Anspruch 1 mit einer Laserdiode (8) die mit dem Datensignal (21) moduliert wird , einer ersten breitbandigen Lichtquelle (1') und einer zweiten breitbandigen Lichtquelle (1"), die miteinander und jeweils einem Eingang eines Kodierungsfilters (3) verbunden sind.

6. Sender nach Anspruch 5 mit einem Verzögerungsglied (10) und/oder einem Dämpfungsglied (9) zur Adaptation der in das Kodierungsfilter eingehenden Signale.

7. Verfahren zur Erzeugung von optisch kodierten Signalen zur Übertragung in einem Kommunikationssystem:
Erzeugung von breitbandigen optischen Signalen
Modulation von zwei optisch invertierten Ausgangssignalen (22) mit einem elektrischen Datensignal (21)
Optische Kodierung der Ausgangsignale (22) und Überlagerung zu einem Übertragungssignal (23).

8. Übertragungssystem zur Übertragung von optisch kodierten Signalen unter Verwendung eines Senders nach Anspruch 1.
